# EUROPÄISCHE PATENTSCHRIFT

(11) **EP 0 516 805 B1**
(45) Veröffentlichungstag und Bekanntmachung des Hinweises auf die Patenterteilung: **30.08.1995**
(21) Anmeldenummer: 92902354.7
(22) Anmeldetag: 18.12.1991
(51) Int. Cl.: A61C 13/265

(54) **GESCHIEBE ZUR FIXIERUNG EINER ABNEHMBAREN ZAHNPROTHESE**
PUSH-IN CONNECTOR FOR HOLDING A REMOVABLE PROSTHESIS IN PLACE
COULISSE POUR LA FIXATION D'UNE PROTHESE DENTAIRE AMOVIBLE

(30) Priorität: 21.12.1990 DE 4041202
(43) Veröffentlichungstag der Anmeldung: 09.12.1992
(73) Patentinhaber: VIGANO, Arno, D-44579 Castrop-Rauxel (DE)
(72) Erfinder: VIGANO, Arno, D-44579 Castrop-Rauxel (DE)
(74) Vertreter: Bockermann, Rolf, Dipl.-Ing.
(86) Internationale Anmeldenummer: DE9101003
(87) Internationale Veröffentlichungsnummer: WO9210977

(56) Entgegenhaltungen:
- EP-A- 0 164 768
- CH-A- 295 239
- US-A- 4 634 382

## Beschreibung

Die Erfindung betrifft ein Geschiebe zur Fixierung einer abnehmbaren Zahnprothese an einer ortsfesten Metallkrone gemäß den Merkmalen im Oberbegriff des Anspruchs 1.

Ein derartiges Geschiebe ist aus der CH-A-295 239 bekannt.

Durch den Katalog "Konstruktionselemente für die Prothetik" der Degussa AG, Geschäftsbereich Dental, Weißfrauenstraße 9, D-6000 Frankfurt 11, Seiten 20 und 21 in der Ausgabe 1989 zählt ein Geschiebe zum Stand der Technik, das eine kugelförmige Patrize umfaßt, die über einen Steg an einer Metallkrone festlegbar ist. Ferner weist dieses Geschiebe eine aus einer Schlitzhülse gebildete Matrize, welche mit Hilfe einer occlusal an die Matrize gelöteten Drahtschlaufe an der abnehmbaren Prothese befestigt werden kann.

Das Geschiebe der US-PS 4,634,382 umfaßt eine kugelförmige Patrize, die über einen im Querschnitt mehrkantigen Steg sowie einen endseitig des Stegs befindlichen T-förmigen Fixierkörper an einer Metallkrone festlegbar ist. Ferner weist das Geschiebe eine aus einer geschlitzten zylindrischen Hülse gebildete Matrize auf, welche mit Hilfe einer radial an die Matrize angesetzten ösenartigen Retention an der abnehmbaren Zahnprothese befestigt werden kann. Auf der der Retention gegenüberliegenden Umfangsseite stehen von der Matrize zwei parallele Stege ab, welche den Fixierkörper seitlich gleitschlüssig umfassen. Die Länge der Stege entspricht etwa der Länge der Matrize bzw. der Länge des Fixierkörpers.

Bei diesem Vorschlag macht sich insbesondere bei an beiden Kieferhälften anzubringenden Geschieben bemerkbar, daß bei ihrer Herstellung auf eine unbedingte Parallelität der getrennt voneinander an den Metallkronen festzulegenden Fixierkörper sowie der über Basisplatten miteinander verbundenen Matrizen geachtet werden muß, um eine Relativbewegung der Matrizen zu den Patrizen zu ermöglichen. Dies ist aber mit einem hohen Herstellungsaufwand unter Verwendung von Parallel- und/oder Fixierungsgeräten verbunden.

Weiterhin ist es für einen Prothesenträger nur mit besonderem Geschick und nach ausreichender Übung möglich, die bekannte Zahnprothese ohne Verkanten ein- und ausgliedern zu können. Dies ist aber gerade bei älteren Menschen sehr schwierig, da deren Finger nicht mehr die für das feinfühlige Ein- und Ausgliedern notwendige Elastizität bzw. Flexibilität aufweisen. Dieser Sachverhalt kann folglich dazu führen, daß entweder die Zahnprothese nicht richtig eingegliedert wird und daher ggf. Schmerzen verursacht bzw. durch ein fehlerhaftes Eingliedern oder Ausgliedern so beschädigt wird, daß die Zahnprothese nicht mehr ordnungsgemäß im Mund positioniert werden kann oder sogar nicht mehr brauchbar ist.

Ferner ergibt sich, daß die durch natürliche Kaukräfte bedingten räumlichen Belastungen die durch das U-förmige Umgreifen des T-förmigen Fixierkörpers gegebene Verbindung Matrize-Patrize negativ beanspruchen können, so daß auch von daher gesehen Beschädigungen zu erwarten sind, welche insbesondere das Ausgliedern der Zahnprothese außerordentlich erschweren.

Darüberhinaus ist es im bekannten Fall nicht zu vermeiden, daß die Friktion zwischen der Matrize und der Patrize schon nach kurzzeitigem Gebrauch der Zahnprothese aufgehoben wird und dadurch die Zahnprothese ebenfalls nicht mehr ordnungsgemäß positionierbar ist.

Ein weiteres negatives Element bildet bei diesem Geschiebe die durch den vergleichsweise langen Fixierkörper und die daran entlang Zwangsgeführte Matrize bestimmte Bauhöhe, welche in vielen Einsatzfällen von vornherein die Verwendung des Geschiebes ausschließt, weil der zum Eingliedern des Geschiebes notwendige Raum nicht zur Verfügung steht.

Schließlich ist es im bekannten Fall noch erforderlich, bei von der axialen Ausrichtung abweichenden Zähnen eine aufwendige Präparation der die Patrize tragenden Zähne vorzunehmen. Diese Präparation ist um so intensiver, je mehr die axiale Abweichung beträgt. Abgesehen davon, daß in diesen Fällen eine besondere manuelle Geschicklichkeit des Zahnarztes bei hohem Zeitaufwand notwendig ist, um dem Zahntechniker die Anfertigung einwandfreier Zahnprothesen zu ermöglichen, muß außerdem darauf geachtet werden, daß keine unnötige Schädigung eines Zahns, verbunden mit zumindest einer Reizung der Pulpa erfolgt. Auf keinen Fall darf aber das Innenleben eines Zahns zerstört werden. Wenn mithin bei axial einigermaßen ausgerichteten Zähnen ein Abtrag von maximal nur 1 mm bis 1,5 mm erfolgen darf, liegt es auf der Hand, daß dann bei schräg stehenden Zähnen dieser Abtrag nur zu einem Bruchteil genutzt werden kann. Dadurch ist die Anwendung des Geschiebes - unabhängig von seinen grundsätzlichen Eigenarten - in vielen Fällen überhaupt nicht möglich, weil die Einschubrichtung der Patrize und Matrize mit der Axialrichtung der vorhandenen Zähne ausgerichtet werden muß.

Bei der Bauart eines Geschiebes gemäß der CH-PS 295 239 erfolgt die Lagefixierung der Patrize in der Matrize mit Hilfe einer Feder und eines Sprengrings, der in einer Nute der Matrize liegt. Das bedeutet, daß bei jedem Einbzw. Ausgliedern des Geschiebes die Patrize durch den Sprengring geführt werden muß. Der Sprengring muß folglich eine solche Gestaltung und Flexibilität haben, daß er sich ausreichend dehnen kann, damit der gesamte Äquator der Patrize hindurch geht, anschließend muß er sich aber wieder so weit zusammenziehen, daß die Patrize einwandfrei lagegesichert ist. Weist der Sprengring aber eine solche Elastizität auf, so ist zu befürchten, daß die Patrize allein unter dem Druck der Feder wieder aus ihrer Lage herausgedrückt wird.

Dadurch, daß die Feder in der Matrize untergebracht ist, ergibt sich auch hinsichtlich der Baugröße des Geschiebes ein weiterer Nachteil.

Als problematisch wird auch die Festlegung der Matrize angesehen, die lediglich über umfangsseitige Nuten erfolgen soll. Auf diese Weise ist zwar eine Festlegung der Matrize in Axialrichtung gewährleistet, jedoch sind Bewegungen in Umfangsrichtung nicht auszuschließen.

Insgesamt kann es sowohl durch die Art der Festlegung der Patrize in der Matrize als auch durch die Festlegung der Matrize selber dazu kommen, daß sich die Prothese relativ zur Patrize bewegen kann mit der Folge von Reizungen des Zahnfleisches bzw. des Kiefers. Führt -dies dann zu Entzündungen, ist das Tragen einer Prothese häufig unmöglich.

Der Erfindung liegt ausgehend von dem im Oberbegriff des Anspruchs 1 beschriebenen Geschiebe das Problem zugrunde, dieses so zu verbessern, daß sowohl seine Herstellung vereinfacht als auch seine Funktion beim Ein- und Ausgliedern einer Zahnprothese bei erheblich verlängerter Standzeit erleichtert wird.

Die Lösung dieses Problems besteht nach der Erfindung in den im kennzeichnenden Teil des Anspruchs 1 aufgeführten Merkmalen.

Die Fertigung einer derartigen Matrize und ihre Zuordnung zur Zahnprothese wird insofern außerordentlich vereinfacht, als insbesondere bei je einem Geschiebe pro Kieferhälfte auf Parallel- oder Fixierungsgeräte verzichtet werden kann. Auch das Ein- und Ausgliedern einer Zahnprothese wird bedeutend erleichtert. Beim Eingliedern einer Zahnprothese braucht nur durch leichten Druck auf die Matrize diese auf die Patrize geschoben zu werden. Hierbei ist ein Verkanten im Prinzip ausgeschlossen. Umgekehrt ist lediglich das Aufbringen geringer Zugkräfte erforderlich, damit die Matrize von der Patrize gleitet. Ein Verkanten beim Ausgliedern wird ebenfalls weitgehend unterbunden.

Weiterhin ist es im Rahmen der Erfindung von Vorteil, daß durch das geschaffene Kugelgelenk die beim Kauen auftretenden Druckkräfte aufgrund der Rotationsfähigkeit der Matrize relativ zur Patrize so auf die Kieferpartien übertragen werden, wie es bei den im Kiefer sich befindenden natürlichen Zähnen der Fall ist. Das heißt, die Erfindung schafft eine weitgehende Angleichung des Einsatzverhaltens einer Zahnprothese an das der natürlichen Zähne.

Die erfindungsgemäße Gestaltung des Geschiebes erlaubt es darüberhinaus, die Patrize in verschiedenen Winkelstellungen relativ zur Metallkrone anzuordnen. Hierdurch wird in besonders einfacher Weise dem Sachverhalt Rechnung getragen, daß der Verlauf des Kieferkamms basal der Patrize sehr unterschiedlich sein kann. Mithin kann die Patrize möglichst nah an den Kieferkamm herangebracht werden, ohne daß hierdurch das leichte Ein- und Ausgliedern der Zahnprothese beeinträchtigt wird.

Auch bilden Schiefstellungen der die Patrize tragenden Zähne kein besonderes Problem mehr. Der zur Festlegung notwendige Zahnabtrag ist minimal und unabhängig von der axialen Ausrichtung eines Zahns; denn die Einschubrichtung ist nicht abhängig von der axialen Richtung der tragenden Zähne.

Die Klemmwand der die Patrize von oben bis über den Äquator übergreifenden Matrize ist durch ihre Querschnittsgestaltung in Verbindung mit der Materialwahl so ausgebildet, daß beim Eingliedern der Zahnprothese der angestrebte Schnappeffekt auch durch ungeübte Prothesenträger gewährleistet, die Friktion bei eingegliederter Zahnprothese sichergestellt und durch relativ geringe Zugkräfte auch das Ausgliedern der Zahnprothese problemlos bewerkstelligt werden kann.

Die Fixierplatte gewährleistet nicht nur eine gezielte Zuordnung der Patrize zur Metallkrone, sondern dient auch der Sicherung der Matrize gegen ein Abkippen nach anterior. Ansonsten wird die Rotationsfähigkeit der Matrize relativ zur Patrize nicht beeinträchtigt.

Die Größe der Friktion kann mit den Merkmalen des Anspruchs 2 noch gezielter bestimmt werden. Sind mehrere Schlitze vorgesehen, so werden diese bevorzugt gleichmäßig über den Umfang der Klemmwand verteilt angeordnet.

Die Rundung am inneren Ende des Schlitzes gemäß Anspruch 3 kann ebenfalls mit dazu beitragen, die Friktion der Matrize an der Patrize noch exakter zu bestimmen. Die Rundung kann ggf. zu einem ovalen Langloch erweitert sein, das sich dann quer zu dem Schlitz in Umfangsrichtung der Klemmwand erstreckt.

Bei Platzmangel basal der Patrize erweisen sich die Merkmale des Anspruchs 4 als zweckmäßig. Es verbleibt jedoch basal des Äquators eine ausreichende Dicke, um eine einwandfreie Klemmung der Matrize an der Patrize sicherzustellen.

Eine Palladium-Legierung gemäß den Merkmalen des Anspruchs 5 entspricht den hygienischen Vorschriften der Mundbeständigkeit und führt aufgrund ihrer inneren Homogenität zu einer langen Lebensdauer selbst bei einem häufigeren Ein- und Ausgliedern der Zahnprothese. Ferner ist der Verschleiß unbedeutend, so daß die Funktion des Zahnersatzes von langer Dauer ist. Auch ermöglicht speziell diese Legierung eine problemlose Nachaktivierung für den Fall, daß die Friktion nachgelassen haben sollte.

Die Erfindung ist nachfolgend anhand von in den Zeichnungen dargestellten Ausführungsbeispielen näher erläutert. Es zeigen:
- Figur 1: in perspektivischer Darstellung eine Innenansicht auf die Zahnkonstellation eines zu sanierenden Oberkiefers;
- Figur 2: ebenfalls in perspektivischer Darstellung eine Zahnprothese zur Eingliederung in den Oberkiefer der Figur 1;

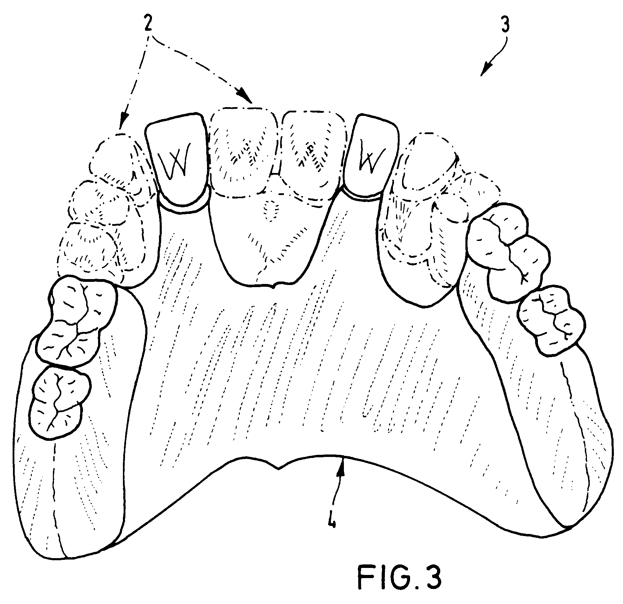

- Figur 3: den Oberkiefer der Figur 1 bei eingegliederter Zahnprothese gemäß Figur 2;
- Figur 4: in vergrößerter perspektivischer Darstellung die Patrize eines Geschiebes;
- Figur 5: in vergrößerter perspektivischer Darstellung die Matrize eines Geschiebes und
- Figur 6: in der Ansicht, teils im Schnitt, die Patrize der Figur 4 und eine Matrize ähnlich der der Figur 5 in zusammengefügtem Zustand.

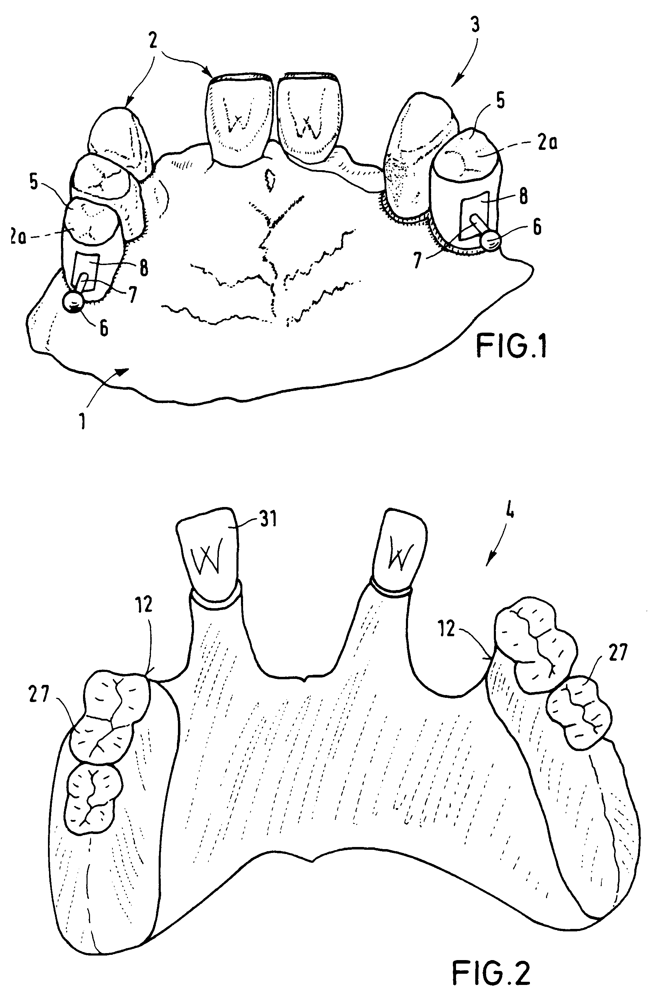

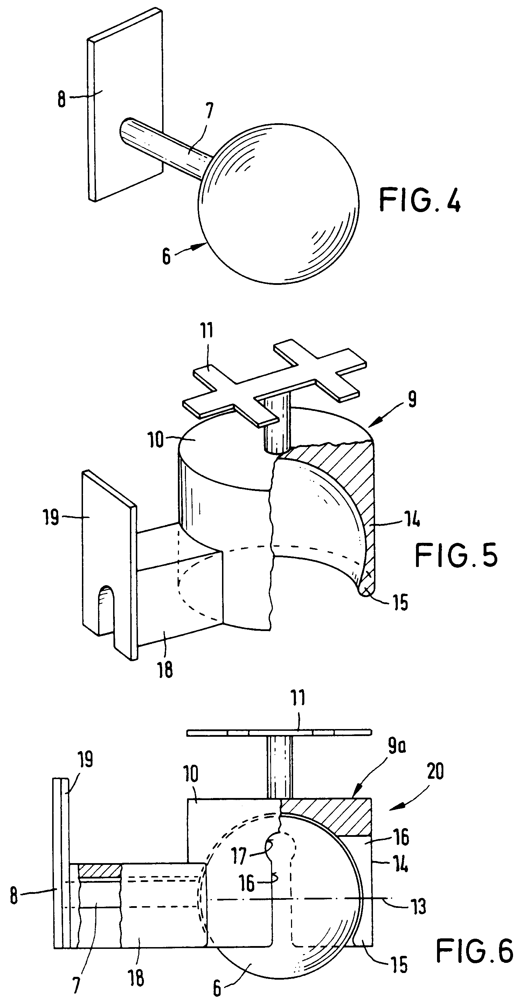

In der Figur 1 ist mit 1 der Oberkiefer eines hinsichtlich der Zähne 2 sanierungsbedüftigen Gebisses 3 bezeichnet. Hierbei sind zur Fixierung einer Zahnprothese 4 mit künstlichen Zähnen 31 gemäß Figur 2 dienende Zähne 2a des Oberkiefers 1 jeweils mit einer verblendeten Metallkrone 5 sowie einer kugelförmigen Patrize 6 gemäß Figur 4 versehen.

Die Patrize 6 besteht aus einer im Gießverfahren hergestellten Kugel, welche über einen bolzenartigen Steg 7 mit einer Fixierplatte 8 einstückig verbunden ist, die der Festlegung der Patrize 6 an der Metallkrone 5 dient.

Zur Eingliederung der Zahnprothese 4 gemäß Figur 2 in den Oberkiefer 1 der Figur 1 sind in den später an die Metallkronen 5 grenzenden Bereichen 12 der Zahnprothese 4 aus an die Patrizen 6 formschlüssig klemmbaren basal offenen Schalen gebildete Matrizen 9 (Figur 5) mit Hilfe von an den Böden 10 der Matrizen 9 vorgesehenen Retentionen 11 befestigt.

Jede Matrize 9 kann, wie in Figur 5 dargestellt, mit einer von occlusal über den Äquator 13 der Patrize 6 greifenden federnden Klemmwand 14 versehen sein. Die Klemmwand 14 weist eine wulstartige Wandkante 15 auf. Denkbar ist aber auch (Figur 6), daß in der Klemmwand 14 von der Wandkante 15 ausgehende Schlitze 16 vorgesehen sind, deren innere Enden 17 gerundet sind.

Sowohl die Matrize 9 gemäß Figur 5 als auch die Matrize 9a der Figur 6 sind mit über den Steg 7 der Patrize 6 der Figur 4 greifenden Mantelhülsen 18 versehen. Außerdem ist stirnseitig der Mantelhülse 18 eine an der Fixierplatte 8 zur Anlage gelangende Stützplatte 19 vorgesehen.

In der Figur 6 ist ein aus der Patrize 6 gemäß Figur 4 und einer geschlitzten Matrize 9a bestehendes Geschiebe 20 im zusammengefügten Zustand dargestellt.

## Patentansprüche

1. Geschiebe zur Fixierung einer abnehmbaren Zahnprothese (4) an einer ortsfesten Metallkrone (5), welches eine an der Metallkrone (5) über einen Fixierkörper (8) sowie einen Steg (7) festlegbare kugelförmige Patrize (6) und eine an der Zahnprothese (4) mit Hilfe einer Retention (11) festlegbare, auf die Patrize (6) klemmbare, basal offene Matrize (9, 9a) umfaßt, wobei die Patrize (6) durch den aus einem Bolzen (7) bestehenden Steg mit dem aus einer Platte (8) gestalteten Fixierkörper (8) verbunden ist, **gekennzeichnet durch** folgende Merkmale
a) die Matrize (9, 9a) ist als an die Patrize (6) formschlüssig angepaßte Klemmschale ausgebildet;
b) die Matrize (9, 9a) besitzt eine federnde Klemmwand (14), welche mit ihrer basalen Wandkante (15) zwischen dem Äquator (13) und dem occlusalen Oberflächenbereich der Patrize (6) angedrückt ist;
c) mit der Klemmwand (14) ist eine im Querschnitt U-förmige, basal offene, den Bolzen (7) übergreifende Mantelhülse (18) verbunden;
d) die Mantelhülse (18) trägt am freien Ende eine an der Fixierplatte (8) flächig zur Anlage bringbare Stützplatte (19);
e) die Retention (11) befindet sich occlusal der Matrize (9, 9a).

2. Geschiebe nach Patentanspruch 1, **dadurch gekennzeichnet**, daß in der Klemmwand (14) mindestens ein in die Wandkante (15) mündender Schlitz (16) vorgesehen ist.

3. Geschiebe nach Patentanspruch 2, **dadurch gekennzeichnet**, daß das innere Ende (17) des Schlitzes (16) gerundet ist.

4. Geschiebe nach einem der Patentansprüche 1 bis 3, **dadurch gekennzeichnet**, daß die Patrize (6) basal abgeflacht ist.

5. Geschiebe nach einem der Patentansprüche 1 bis 4, **dadurch gekennzeichnet**, daß Patrize (6) und Matrize (9, 9a) aus einer Palladium-Legierung bestehen.

## Claims

1. A precision attachment for fixing a removable dental prosthesis (4) to a fixed metal crown (5), the attachment having: a spherical male member (6) attachable to the metal crown (5) by way of a fixing member (8) and an arm (7); and a basally open female member (9, 9a) which is securable to the prosthesis (4) by means of a retention (11) and which is clampable on the male member (6), the latter being connected by the arm, which consists of a pin (7), to the fixing member (8), the latter being in the form of a plate (8), characterised by the following features:
a) the female member (9, 9a) is in the form of a clamping shell adapted for positive engagement with the male member (6);
b) the female member (9, 9a) has a resilient clamping wall (14) which is pressed by way of its basal wall edge (15) between the equator (13) and the occlusal surface zone of the male member (6);
c) a U-cross-section basally open sleeve (18) which engages over the pin (7) is connected to the clamping wall (14);
d) the sleeve (18) has at its free end a bearing or support plate (19) engageable surface-wise with the fixing plate (8), and
e) the retention (11) is disposed occlusally of the female member (9, 9a).

2. A precision attachment according to claim 1, characterised in that the clamping wall (14) is formed with at least one slot (16) which opens into the wall edge (15).

3. A precision attachment according to claim 2, characterised in that the inner end (17) of the slot (16) is rounded.

4. A precision attachment according to any of claims 1 to 3, characterised in that the male member (6) is chamfered basally.

5. A precision attachment according to any of claims 1 to 4, characterised in that the male member (6) and the female member (9, 9a) are made of a palladium alloy.

## Revendications

1. Insert pour la fixation d'une prothèse dentaire amovible (4) sur une couronne métallique à demeure (5), qui comprend un poinçon (6) sphérique pouvant être fixé sur la couronne métallique (5) par l'intermédiaire d'un corps de fixation (8) ainsi qu'une tige (7) et une matrice (9, 9a) ouverte au niveau de sa base, bridable sur le poinçon (6), fixable sur la prothèse dentaire (4) à l'aide d'une rétention (11), le poinçon (6) étant relié par la tige consistant en un axe (7) au corps de fixation (8) en forme de plaque (8), caractérisé par les particularités suivantes :
a) la matrice (9, 9a) se présente sous forme de coquille de bridage adaptée pour une liaison par engagement positif sur le poinçon (6) ;
b) la matrice (9, 9a) possède une paroi de bridage élastique (14) qui est comprimée par son bord de paroi de base (14) entre l'équateur (13) et la zone de surface d'occlusion du poinçon (6) ;
c) à la paroi de bridage (14) est raccordée une gaine enveloppante (18) de section transversale en forme de U, ouverte sur la base, emprisonnant l'axe (7) par le dessus ;
d) la gaine enveloppante (18) supporte sur l'extrémité libre une plaque d'appui (19) pouvant être mise en place à plat sur la plaque de fixation (8) ;
e) la rétention (11) se trouve en occlusion par rapport à la matrice (9, 9a).

2. Insert selon la revendication 1, caractérisé en ce que dans la paroi de bridage (14), est prévue au moins une fente (16) débouchant dans le bord de paroi (15).

3. Insert selon la revendication 2, caractérisé en ce que l'extrémité interne (17) de la fente (16) est arrondie.

4. Insert selon l'une des revendications 1 à 3, caractérisé en ce que le poinçon (6) est aplati sur sa base.

5. Insert selon l'une des revendications 1 à 4, caractérisé en ce que le poinçon (6) et la matrice (9, 9a) consistent en un alliage au palladium.
